# EUROPÄISCHE PATENTSCHRIFT

(11) **EP 4 480 021 B1**
(45) Veröffentlichungstag und Bekanntmachung des Hinweises auf die Patenterteilung: **08.04.2026**
(21) Anmeldenummer: 23703166.1
(22) Anmeldetag: 01.02.2023
(51) Int. Cl.: H01M 8/008

(54) **ZELLSTAPELFIXIERVORRICHTUNG ZUM FIXIEREN EINES ZELLSTAPELS EINER BRENNSTOFFZELLE UND/ODER EINES ELEKTROLYSEURS WÄHREND EINES TRENNVORGANGS**
CELL STACK FIXING DEVICE FOR FIXING A CELL STACK OF A FUEL CELL AND/OR OF AN ELECTROLYSER DURING A SEPARATION PROCESS
DISPOSITIF DE FIXATION D'EMPILEMENT DE CELLULES SERVANT À LA FIXATION D'UN EMPILEMENT DE CELLULES ET/OU D'UN ÉLECTROLYSEUR PENDANT UNE OPÉRATION DE SÉPARATION

(30) Priorität: 16.02.2022 DE 102022201568
(43) Veröffentlichungstag der Anmeldung: 25.12.2024
(73) Patentinhaber: Robert Bosch GmbH, 70442 Stuttgart (DE)
(72) Erfinder: BERGER, Martin, 74385 Pleidelsheim (DE); DIESSNER, Christian, 75417 Muehlacker-Muehlhausen (DE)
(86) Internationale Anmeldenummer: PCT/EP2023/052399
(87) Internationale Veröffentlichungsnummer: WO 2023/156196

(56) Entgegenhaltungen:
- WO-A2-2005/045969
- CN-U- 207 938 749
- JP-A- 2005 183 313

## Beschreibung

### Stand der Technik

Die Erfindung betrifft eine Zellstapelfixiervorrichtung zum Fixieren eines Zellstapels, insbesondere einer elektrochemischen Zelle, während eines Trennvorgangs aneinanderhaftender Zelllagen des Zellstapels und ein Zellstapelfixiersystem mit einer derartigen Zellstapelfixiervorrichtung und einem Trennelement sowie eine Verwendung einer derartigen Zellstapelfixiervorrichtung und/oder eines derartigen Zellstapelfixiersystems zum Fixieren eines Zellstapels und ein Verfahren zum Fixieren eines Zellstapels.

Beim Recycling von unterschiedlichsten Produkten wie bspw. Verpackungen, Elektroschrott, etc. werden die Produkte typischerweise "undefiniert" zerkleinert, d.h. geschreddert oder gemahlen. Danach werden die werthaltigen von den weniger werthaltigen Fraktionen getrennt und weiterverarbeitet. Die Patentschrift JP2005183313A offenbart eine Zellstapelfixiervorrichtung mit einer Zellstapelaufnahmeeinheit zum Aufnehmen eines Zellstapels und einer Fixiereinheit,

Brennstoffzellenstacks bzw. Brennstoffzellenstapel bestehen aus Membran-Elektroden-Einheiten (MEA), welche Membranen, Gasdiffusionslagen (GDL) und Dichtungsrahmen umfassen, sowie Bipolarplatten (BPP), welche in der Regel aus Stahlblech oder gefrästen Graphitplatten bestehen. Diese beiden Bauteile - MEA und BPP - werden abwechselnd übereinandergestapelt. Ein typischer Brennstoffzellenstack im Automotive-Bereich mit ca. 100 kW Leistung besteht aus 350 bis 400 BPPs und ebenso vielen MEAs. Je nach Produktdesign sind die Bauteile durch die Dichtungen oder die GDL mit zunehmender Laufleistung auch zunehmend stark miteinander verklebt.

Beim Recycling von Brennstoffzellenstacks wird gemäß dem einleitend beschriebenen Verfahren vorgegangen, welches gleich mehrere Nachteile mit sich bringt. Zunächst sind die MEA von den BPP zwecks Recycling bzw. Remanufacturing aufgrund der zunehmenden Verklebung/Korrosion schwer voneinander zu trennen. Dies führt dazu, dass sehr werthaltige, weil Platinhaltige, Partikel oder Stäube an den Bipolarplatten-Fragmenten haften bleiben, somit mit ihnen aussortiert werden und damit unwiederbringbar verloren gehen. Ein Remanufacturing z.B. von Bipolarplatten ist aufgrund der zerstörenden Zerkleinerung ausgeschlossen. Des Weiteren birgt ein undefinierter Zerlegeprozess für das Recycling die Gefahr hoher Verluste werthaltiger Materialien.

Ein Trennvorgang aneinanderhaftender Zelllagen des Zellstapels kann derart durchgeführt werden, dass ein Trennelement/Trennwerkzeug, bspw. in Form eines Drahts oder eines Fadens zwischen den aneinanderhaftenden Zelllagen des Zellstapels durch den, insbesondere gesamten Zellstapel hindurchgeführt wird. Hierbei kann es jedoch je nach Trennelement problematisch werden, wenn
- der Zellstapel lose auf der Arbeitsplatte liegt und damit als Ganzes oder ein in sich herauslösender Teilzellstapel verschiebbar ist oder wird, und/oder
- die oberste, bereits teilweise abgelöste Zelllage sich undefiniert verschiebt, solange das Trennelement unter ihr noch bewegt wird, und/oder
- eine Durchbiegung des Zellstapels in eine oder mehrere Richtungen vorliegt, da großflächiger wirkende Trennelemente wie bspw. ein Draht oder eine Schnur, welcher über die gesamte Länge oder Breite des Zellstapels eingefädelt werden müssen, nicht mehr einsetzbar ist,
sodass der Trennvorgang nicht reibungslos oder gar nicht durchführbar ist.

### Offenbarung der Erfindung

Gegenstand der vorliegenden Erfindung ist eine Zellstapelfixiervorrichtung zum Fixieren eines Zellstapels, insbesondere einer elektrochemischen Zelle, während eines Trennvorgangs aneinanderhaftender Zelllagen des Zellstapels, bei dem ein Trennelement zwischen den aneinanderhaftenden Zelllagen des Zellstapels durch den, insbesondere gesamten Zellstapel hindurchgeführt wird, mit einer Zellstapelaufnahmeeinheit zum Aufnehmen des Zellstapels und einer Fixiereinheit, welche ausgebildet ist, den aufgenommenen Zellstapel in Abhängigkeit von einer Relativposition des Trennelements zu dem aufgenommenen Zellstapel an jeweils unterschiedlichen Fixierbereichen in Stapelrichtung gegen die Zellstapelaufnahmeeinheit zu drücken, um den aufgenommenen Zellstapel während des, insbesondere gesamten Hindurchführens des Trennelements fixiert zu halten.

Gegenstand der vorliegenden Erfindung ist ferner ein Zellstapelfixiersystem mit einer vorangehend beschriebenen Zellstapelfixiervorrichtung und einem, insbesondere translatorisch bewegbar gelagerten Trennelement zur Durchführung des Trennvorgangs.

Gegenstand der vorliegenden Erfindung ist außerdem eine Verwendung einer vorangehend beschriebenen Zellstapelfixiervorrichtung und/oder eines vorangehend beschriebenen Zellstapelfixiersystems zum Fixieren eines Zellstapels, insbesondere einer elektrochemischen Zelle, während eines Trennvorgangs aneinanderhaftender Zelllagen des Zellstapels, bei dem ein Trennelement zwischen den aneinanderhaftenden Zelllagen des Zellstapels durch den, insbesondere gesamten Zellstapel hindurchgeführt wird.

Gegenstand der vorliegenden Erfindung ist des Weiteren ein Verfahren zum Fixieren eines Zellstapels, insbesondere einer elektrochemischen Zelle, während eines Trennvorgangs aneinanderhaftender Zelllagen des Zellstapels, bei dem ein Trennelement zwischen den aneinanderhaftenden Zelllagen des Zellstapels durch den, insbesondere gesamten Zellstapel hindurchgeführt wird, wobei eine Fixiereinheit den in einer Zellstapelaufnahmeeinheit aufgenommenen Zellstapel in Abhängigkeit von einer Relativposition des Trennelements zu dem aufgenommenen Zellstapel an jeweils unterschiedlichen Fixierbereichen in Stapelrichtung gegen die Zellstapelaufnahmeeinheit drückt, um den aufgenommenen Zellstapel während des, insbesondere gesamten Hindurchführens des Trennelements fixiert zu halten.

Da der Zellstapel vorzugsweise von oben nach unten lagenweise demontiert wird, kommt eine fixe Verspannung, welche den Zellstapel flächig nach unten drückt, nicht in Frage. Daher wird erfindungsgemäß eine Zellstapelfixiervorrichtung vorgeschlagen, bei der eine Fixiereinheit den Zellstapel in Abhängigkeit von einer Relativposition des Trennelements zu dem aufgenommenen Zellstapel an jeweils unterschiedlichen Fixierbereichen in Stapelrichtung drückt, um diesen während des, insbesondere gesamten Hindurchführens des Trennelements fixiert zu halten. D.h., mit anderen Worten, dass die Fixierbereiche, also die Punkte, an denen die Fixiereinheit den Zellstapel drückt, in Abhängigkeit von der Relativposition des Trennwerkzeugs wechseln bzw. wandern.

Hierdurch wird eine "dynamische" bzw. bewegliche Fixierung bereitgestellt, welche einerseits den Zellstapel ausreichend gegen ein Verschieben sichert und eine ggf. vorhandene Krümmung des Zellstapels verhindert sowie andererseits den Einsatz bzw. die Durchführung des Trennelements/Trennwerkzeugs nicht behindert. Dies wird dadurch erzielt, dass die Fixiereinheit abhängig von der Relativposition des Trennelements derart drückt, dass bzw. nur dort drückt wo das Trennelement beim Hindurchführen nicht behindert wird. Dabei ist es unerheblich, ob das Trennelement händisch geführt oder automatisch bewegt wird. Somit ist die Demontage einfach, schnell und reibungslos mittels des entsprechenden Trennelements sowohl händisch als auch automatisiert durchführbar.

Unter einem Hindurchführen ist im Rahmen der vorliegenden Erfindung insbesondere ein durchgängiges Durchführen des Trennelements von einer Seite des Zellstapels bis zu einer gegenüberliegenden Seite des Zellstapels gemeint.

Eine elektrochemische Zelle umfasst im Rahmen der vorliegenden Erfindung insbesondere eine Brennstoffzelle und/oder eine Elektrolysezelle und/oder eine Batteriezelle. Hierbei sei angemerkt, dass der Zellstapel auch der eines Kühlers oder Wärmetauschers sein kann, ohne dabei den Rahmen der vorliegenden Erfindung zu verlassen.

Unter einer Zellstapelfixiervorrichtung soll ich Rahmen der vorliegenden Erfindung eine Vorrichtung verstanden werden, welche ausgebildet und entsprechend dimensioniert ist, um einen Zellstapel, insbesondere einer elektrochemischen Zelle, während eines Trennvorgangs aneinanderhaftender Zelllagen des Zellstapels, bei dem ein Trennelement zwischen den aneinanderhaftenden Zelllagen des Zellstapels durch den, insbesondere gesamten Zellstapel hindurchgeführt wird, zu fixieren.

Eine Zelllage des Zellstapels kann eine Membran-Elektroden-Einheit (MEA) oder eine Bipolarplatte (BPP) umfassen oder daraus bestehen. Demnach kann der Zellstapel bspw. 700 bis 1000 Zelllagen umfassend 350 bis 500 BPPs und 350 bis 500 MEAs aufweisen.

Die Zellstapelaufnahmeeinheit kann bspw. als Arbeitstisch oder Arbeitsplatte ausgebildet sein. Die Zellstapelaufnahmeeinheit kann höhenverstellbar ausgebildet sein.

Die Fixiereinheit ist ausgebildet, den aufgenommenen Zellstapel in Abhängigkeit von einer Relativposition des Trennelements zu dem aufgenommenen Zellstapel an jeweils unterschiedlichen Fixierbereichen in Stapelrichtung gegen die Zellstapelaufnahmeeinheit zu drücken. Hierbei ist es insbesondere vorteilhaft, wenn die Fixiereinheit derart ausgebildet ist, dass sie in Abhängigkeit von der Relativposition des Trennelements zu dem aufgenommenen Zellstapel nur an Fixierbereichen drückt, unter denen das Trennelement abwesend ist. Ferner ist es insbesondere vorteilhaft, wenn die Fixiereinheit derart ausgebildet ist, dass sie während des gesamten Hindurchführens des Trennelements immer mindestens an einem Fixierbereich gegen den Zellstapel drückt, um diesen während des gesamten Hindurchführens des Trennelements fixiert zu halten.

Unter einer Relativposition soll im Rahmen der vorliegenden Erfindung die relative Position, insbesondere lineare Position des Trennelements quer zur Stapelrichtung, d.h. in der Zelllagenebene verstanden werden.

Unter einem Fixierbereich soll im Rahmen der vorliegenden Erfindung der Wirkbereich bzw. Druckbereich der Fixiereinheit an dem Zellstapel verstanden werden, wobei verständlicherweise nicht nur der Druckpunkt an sich, sondern auch der umliegende betroffene Bereich umfasst ist.

Es ist vorteilhaft, wenn die Fixiereinheit zum Drücken des Zellstapels gegen die Zellstapelaufnahmeeinheit zumindest ein relativ zu der Zellstapelaufnahmeeinheit translatorisch/linear bewegbar gelagertes Fixierelement aufweist.

Hierbei kann in einem Ausführungsbeispiel das zumindest eine Fixierelement als zumindest eine Andrückrolle ausgebildet sein, welche auf dem Zellstapel rollbar ist, um diesen an jeweils unterschiedlichen Fixierbereichen gegen die Zellstapelaufnahmeeinheit zu drücken. Die zumindest eine Andrückrolle kann zur Druckausübung gefedert oder aktiv gesteuert sein. Vorteilhafterweise kann die Fixiereinheit einen translatorisch/linear bewegbar gelagerten bzw. einen schienengeführten Träger aufweisen, an dem die zumindest eine Andrückrolle und ein Trennelementaufnahmeeinheit zur Aufnahme des Trennelements angeordnet sind. Der Träger kann höhenverstellbar ausgebildet sein.

Dabei ist es weiter vorteilhaft, wenn die zumindest eine Andrückrolle in einer bestimmungsgemäßen Bewegungsrichtung des Trennelements vor dem Trennelement angeordnet ist. Hierdurch kann auf sehr einfache Art und Weise eine Fixiereinheit bereitgestellt werden, bei der sich eine Andrückrolle in einem konstanten Abstand zu dem Trennelement mitbewegt und immer den Zellstapels vor dem Trennelement in Stapelrichtung gegen die Zellstapelaufnahmeeinheit drückt.

Zusätzlich ist es vorteilhaft, wenn ferner zumindest eine weitere Andrückrolle in der bestimmungsgemäßen Bewegungsrichtung des Trennelements hinter dem Trennelement angeordnet ist. Durch diese Maßnahme kann sichergestellt werden, dass der Zellstapel während des gesamten Hindurchführens des Trennelements, also auch nachdem die vordere Andrückrolle den Zellstapel verlassen hat, fixiert bleibt.

In einem weiteren Ausführungsbeispiel kann die Fixiereinheit zumindest zwei Fixierelemente aufweisen, welche als ausfahrbare Stößel ausgebildet sind, wobei die zumindest zwei Stößel in Stapelrichtung des Zellstapels gegen den Zellstapel ausfahrbar sind, um diesen an jeweils unterschiedlichen Fixierbereichen gegen die Zellstapelaufnahmeeinheit zu drücken. Der Stößel kann hierbei als Stempel oder Stift ausgebildet sein. Vorteilhafterweise kann die Fixiereinheit eine Vielzahl von ausfahrbaren Stößeln aufweisen, welche über eine Zellstapelfläche des Zellstapels, insbesondere entlang einer Linie oder eines zweidimensionalen Musters zueinander beabstandet angeordnet sind.

Dabei ist es weiter vorteilhaft, wenn die ausfahrbaren Stößel in Abhängigkeit von der Relativposition des Trennelements zu dem aufgenommenen Zellstapel derart ansteuerbar sind, dass nur Stößel gegen den Zellstapel drücken, unter denen das Trennelement abwesend ist, und/oder während des gesamten Hindurchführens des Trennelements immer mindestens ein Stößel gegen den Zellstapel drückt, um diesen während des gesamten Hindurchführens des Trennelements fixiert zu halten.

Des Weiteren ist es vorteilhaft, wenn eine, insbesondere optische Sensoreinheit zur Ermittlung der Relativposition des Trennelements zu dem aufgenommenen Zellstapel vorgesehen ist. Die Sensoreinheit kann bspw. als Kontaktsensor oder als Kamera ausgebildet sein. Hierbei ist es ferner vorteilhaft, wenn eine Steuereinheit zur Ansteuerung der Fixiereinheit und/oder Fixierelemente in Abhängigkeit von der ermittelten Relativposition vorgesehen ist.

Demnach ist auch denkbar, dass ein manueller Demontageprozess durch bspw. eine oder mehrere optische Sensoreinheiten, insbesondere Kameras überwacht und die Relativposition des bewegten Trennelements kontinuierlich ermittelt wird. Somit ist auch im händischen Zerlegeprozess eine dynamische Fixierung des Zellstapels möglich und der Werker kann sich rein auf das Demontieren konzentrieren.

Das Trennelement ist bevorzugt translatorisch/linear bewegbar gelagert bzw. schienengeführt ausgebildet. Das Trennelement kann an einem, insbesondere höhenverstellbaren Träger angeordnet sein.

Das Trennelement umfasst vorteilhafterweise zumindest einen Draht und/oder Faden, insbesondere eine Vielzahl von parallel zueinander angeordneten Drähten und/oder Fäden bzw. Schnüre/Garne. D.h., mit anderen Worten, dass bspw. eine Vielzahl parallel gespannter Drähte oder Fäden als Trennelemente in einer rahmenförmigen Trennelementaufnahmeeinheit angeordnet sein können, welche sich beim Einführen in den Zellstapel in die Zwischenräume der zu trennenden Zelllagen einfädeln. Hierbei können die Drähte und/oder Fäden zueinander beabstandet entlang einer Stapelrichtung angeordnet sein. Die Anzahl der Drähte und/oder Fäden und/oder der Abstand zwischen diesen ist/sind an den Zellstapel und ggf. die jeweiligen Fertigungstoleranzen und geometrischen Bauteiltoleranzen angepasst. Der Abstand kann fixiert und unveränderbar sein. Es ist jedoch vorteilhaft, wenn der Abstand einstellbar ist.

### Zeichnungen

Die Erfindung wird nachstehend anhand der beigefügten Zeichnungen beispielhaft näher erläutert. Es zeigen:
- Fig. 1: eine schematische Darstellung eines Zellstapelfixiersystems mit einer Ausführungsform einer Zellstapelfixiervorrichtung;
- Fig. 2: eine schematische Darstellung eines Zellstapelfixiersystems mit einer weiteren Ausführungsform einer Zellstapelfixiervorrichtung; und
- Fig. 3: ein Ablaufdiagramm eines Verfahrens zum Fixieren eines Zellstapels, insbesondere einer elektrochemischen Zelle, während eines Trennvorgangs aneinanderhaftender Zelllagen des Zellstapels.

In der nachfolgenden Beschreibung vorteilhafter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

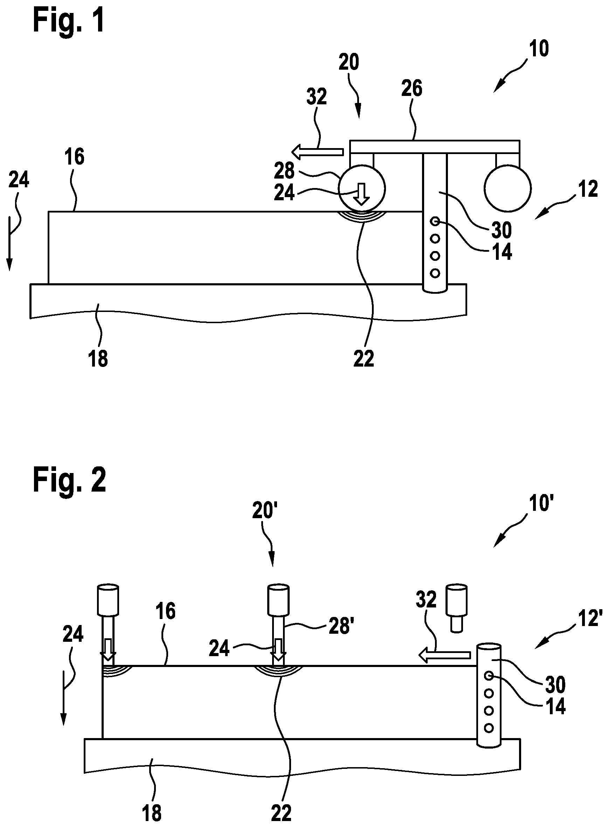

Fig. 1 und Fig. 2 zeigen vorteilhafte Ausführungsformen eines Zellstapelfixiersystems, welche in ihrer Gesamtheit mit der Bezugsziffer 10 und 10' versehen sind.

Das Zellstapelfixiersystem 10 aus Fig. 1 weist eine Ausführungsform einer Zellstapelfixiervorrichtung 12 und Trennelemente 14 auf.

Die Zellstapelfixiervorrichtung 12 ist ausgebildet, um einen Zellstapel 16, insbesondere einer (nicht gezeigten) Brennstoffzelle, während eines Trennvorgangs aneinanderhaftender Zelllagen des Zellstapels 16, bei dem die Trennelemente 14 zwischen den aneinanderhaftenden Zelllagen des Zellstapels 16 durch den gesamten Zellstapel 16 hindurchgeführt werden, zu fixieren. Hierfür weist die Zellstapelfixiervorrichtungen 12 eine als Arbeitstisch 18 ausgebildete Zellstapelaufnahmeeinheit 18 zum Aufnehmen des Zellstapels 16 und eine Fixiereinheit 20 auf.

Die Fixiereinheit 20 ist ausgebildet, den aufgenommenen Zellstapel 16 in Abhängigkeit von einer Relativposition der Trennelement 14 zu dem aufgenommenen Zellstapel 16an jeweils unterschiedlichen Fixierbereichen 22 in Stapelrichtung 24 gegen die Zellstapelaufnahmeeinheit 18 zu drücken, um den aufgenommenen Zellstapel 16 während des, insbesondere gesamten Hindurchführens der Trennelement 14 fixiert zu halten. Hierbei ist die Fixiereinheit 20 ferner derart ausgebildet, dass sie in Abhängigkeit von der Relativposition der Trennelement 14 zu dem aufgenommenen Zellstapel 16 nur an Fixierbereichen 22 drückt, unter denen die Trennelement 14 abwesend sind.

Zum Drücken des Zellstapels 16 gegen die Zellstapelaufnahmeeinheit 18 weist die Fixiereinheit 20 einen translatorisch bewegbar gelagerten Träger 26 auf, an dem zwei als Andrückrollen 28 ausgebildete Fixierelemente 28 und eine rahmenförmige Trennelementaufnahmeeinheit 30 zur Aufnahme der Trennelemente 14 angeordnet sind.

Die Andrückrollen 28 sind auf dem Zellstapel 16 rollbar, um diesen an jeweils unterschiedlichen Fixierbereichen 22 gegen die Zellstapelaufnahmeeinheit 18 zu drücken. Hierbei ist eine der Andrückrollen 28 in einer bestimmungsgemäßen Bewegungsrichtung 32 der Trennelemente 14 vor den Trennelementen 14 und die andere Andrückrolle 28 in der bestimmungsgemäßen Bewegungsrichtung 32 der Trennelemente 14 hinter den Trennelementen 14 angeordnet, sodass während des gesamten Hindurchführens des Trennelements immer mindestens eine der Andrückrollen 28 an einem Fixierbereich 22 gegen den Zellstapel 16 drückt.

Die Trennelemente 14 umfassen hierbei eine Vielzahl parallel gespannter Drähte 14, welche in der rahmenförmigen Trennelementaufnahmeeinheit 30 angeordnet sind und sich beim Einführen in den Zellstapel 16 in die Zwischenräume der zu trennenden Zelllagen einfädeln. Die Drähte 14 sind gleichmäßig zueinander beabstandet entlang der Stapelrichtung 24 angeordnet.

Das Zellstapelfixiersystem 10' aus Fig. 2 weist eine weitere Ausführungsform einer Zellstapelfixiervorrichtung 12' und Trennelemente 14 auf.

Im Vergleich zu der Ausführungsform aus Fig. 1 weist die Zellstapelfixiervorrichtung 12' eine Fixiereinheit 20' mit drei Fixierelementen 28' auf, welche als ausfahrbare Stößel 28' ausgebildet sind. Die ausfahrbaren Stößel 28' sind über eine Zellstapelfläche des Zellstapels 16 entlang einer Linie zueinander beabstandet angeordnet.

Die ausfahrbaren Stößel 28' sind in Stapelrichtung 24 des Zellstapels 16 gegen den Zellstapel 16 ausfahrbar, um diesen in Abhängigkeit von der Relativposition der Trennelemente 14 zu dem Zellstapel 16 an jeweils unterschiedlichen Fixierpunkten 22 gegen die Zellstapelaufnahmeeinheit 18 zu drücken. Hierbei sind die Stößel 28' in Abhängigkeit von der Relativposition der Trennelemente 14 zu dem aufgenommenen Zellstapel 16 derart ansteuerbar, dass nur Stößel 28' gegen den Zellstapel 16 drücken, unter denen die Trennelemente 14 abwesend ist und während des gesamten Hindurchführens der Trennelement 14 immer mindestens ein Stößel 28' gegen den Zellstapel 16 drückt, um diesen während des gesamten Hindurchführens der Trennelemente 14 fixiert zu halten.

Die Relativposition der Trennelemente 14 wird hierbei mittels einer (nicht gezeigten) Sensoreinheit ermittelt, wobei eine (nicht gezeigte) Steuereinheit die Stößel 28' in Abhängigkeit von der ermittelten Relativposition ansteuert.

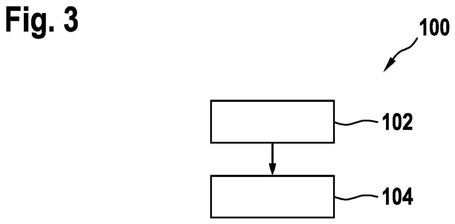

Fig. 3 zeigt ein Ablaufdiagramm eines Verfahrens 100 zum Fixieren eines Zellstapels 16, insbesondere einer elektrochemischen Zelle, während eines Trennvorgangs aneinanderhaftender Zelllagen des Zellstapels 16, bei dem ein Trennelement 14 zwischen den aneinanderhaftenden Zelllagen des Zellstapels 16 durch den gesamten Zellstapel 16 hindurchgeführt wird. Das Verfahren 100 umfasst einen Schritt des Aufnehmens 102 des Zellstapels 16 in einer Zellstapelaufnahmeeinheit 18. Das Verfahren 100 umfasst ferner einen Schritt des Drückens 104 des aufgenommenen Zellstapels 16 in Abhängigkeit von einer Relativposition des Trennelements 14 zu dem aufgenommenen Zellstapel 16 an jeweils unterschiedlichen Fixierbereichen 22 in Stapelrichtung 24 gegen die Zellstapelaufnahmeeinheit 18 mittels einer Fixiereinheit 20, 20', um den aufgenommenen Zellstapel 16 während des, insbesondere gesamten Hindurchführens des Trennelements 14 fixiert zu halten.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Zellstapelfixiervorrichtung (12; 12') zum Fixieren eines Zellstapels (16), insbesondere einer elektrochemischen Zelle, während eines Trennvorgangs aneinanderhaftender Zelllagen des Zellstapels (16), bei dem ein Trennelement (14) zwischen den aneinanderhaftenden Zelllagen des Zellstapels (16) durch den, insbesondere gesamten Zellstapel hindurchgeführt wird, mit einer Zellstapelaufnahmeeinheit (18) zum Aufnehmen des Zellstapels (16) und einer Fixiereinheit (20; 20'), welche ausgebildet ist, den aufgenommenen Zellstapel (16) in Abhängigkeit von einer Relativposition des Trennelements (14) zu dem aufgenommenen Zellstapel (16) an jeweils unterschiedlichen Fixierbereichen (22) in Stapelrichtung (24) gegen die Zellstapelaufnahmeeinheit (18) zu drücken, um den aufgenommenen Zellstapel (16) während des, insbesondere gesamten Hindurchführens des Trennelements (14) fixiert zu halten.

2. Zellstapelfixiervorrichtung (12; 12') nach Anspruch 1, **dadurch gekennzeichnet, dass** die Fixiereinheit (20; 20') derart ausgebildet ist, dass sie in Abhängigkeit von der Relativposition des Trennelements (14) zu dem aufgenommenen Zellstapel (16) nur an Fixierbereichen (22) drückt, unter denen das Trennelement (14) abwesend ist.

3. Zellstapelfixiervorrichtung (12; 12') nach Anspruch 1 oder 2, **dadurch gekennzeichnet, dass** die Fixiereinheit (20; 20') derart ausgebildet ist, dass sie während des gesamten Hindurchführens des Trennelements (14) immer mindestens an einem Fixierbereich (22) gegen den Zellstapel (16) drückt.

4. Zellstapelfixiervorrichtung (12; 12') nach einem der vorhergehenden Ansprüche, **dadurch gekennzeichnet, dass** die Fixiereinheit (20; 20') zum Drücken des Zellstapels (16) gegen die Zellstapelaufnahmeeinheit (18) zumindest ein relativ zu der Zellstapelaufnahmeeinheit (18) translatorisch bewegbar gelagertes Fixierelement (28; 28') aufweist.

5. Zellstapelfixiervorrichtung (12) nach Anspruch 4, **dadurch gekennzeichnet, dass** das zumindest eine Fixierelement (28) als zumindest eine Andrückrolle (28) ausgebildet ist, welche auf dem Zellstapel (16) rollbar ist, um diesen an jeweils unterschiedlichen Fixierbereichen (22) gegen die Zellstapelaufnahmeeinheit (18) zu drücken.

6. Zellstapelfixiervorrichtung (12) nach Anspruch 5, **dadurch gekennzeichnet, dass** die zumindest eine Andrückrolle (28) zur Druckausübung gefedert oder aktiv gesteuert ist.

7. Zellstapelfixiervorrichtung (12) nach Anspruch 5 oder 6, **dadurch gekennzeichnet, dass** das die Fixiereinheit (20) einen translatorisch bewegbar gelagerten Träger (26) aufweist, an dem die zumindest eine Andrückrolle (28) und ein Trennelementaufnahmeeinheit (30) zur Aufnahme des Trennelements (14) angeordnet sind.

8. Zellstapelfixiervorrichtung (12) nach Anspruch 7, **dadurch gekennzeichnet, dass** die zumindest eine Andrückrolle (28) in einer bestimmungsgemäßen Bewegungsrichtung (32) des Trennelements (14) vor dem Trennelement (14) angeordnet ist, und insbesondere ferner zumindest eine weitere Andrückrolle (28) in der bestimmungsgemäßen Bewegungsrichtung (32) des Trennelements (14) hinter dem Trennelement (14) angeordnet ist.

9. Zellstapelfixiervorrichtung (12') nach Anspruch 4, **dadurch gekennzeichnet, dass** die Fixiereinheit (20') zumindest zwei Fixierelemente (28') aufweist, welche als ausfahrbare Stößel (28') ausgebildet sind, wobei die zumindest zwei Stößel (28') in Stapelrichtung (24) des Zellstapels (16) gegen den Zellstapel (16) ausfahrbar sind, um diesen an jeweils unterschiedlichen Fixierbereichen (22) gegen die Zellstapelaufnahmeeinheit (18) zu drücken.

10. Zellstapelfixiervorrichtung (12') nach Anspruch 9, **dadurch gekennzeichnet, dass** die Fixiereinheit (20') eine Vielzahl von ausfahrbaren Stößeln (28') aufweist, welche über eine Zellstapelfläche des Zellstapels (16), insbesondere entlang einer Linie oder eines zweidimensionalen Musters zueinander beabstandet angeordnet sind.

11. Zellstapelfixiervorrichtung (12') nach Anspruch 9 oder 10, **dadurch gekennzeichnet, dass** die ausfahrbaren Stößel (28') in Abhängigkeit von der Relativposition des Trennelements (14) zu dem aufgenommenen Zellstapel (16) derart ansteuerbar sind, dass nur Stößel (28') gegen den Zellstapel drücken, unter denen das Trennelement (14) abwesend ist, und/oder während des gesamten Hindurchführens des Trennelements (14) immer mindestens ein Stößel (28') gegen den Zellstapel (16) drückt, um diesen während des gesamten Hindurchführens des Trennelements (14) fixiert zu halten.

12. Zellstapelfixiervorrichtung (12; 12') nach einem der vorhergehenden Ansprüche, **gekennzeichnet, durch** eine, insbesondere optische Sensoreinheit zur Ermittlung der Relativposition des Trennelements (14) zu dem aufgenommenen Zellstapel (16), und insbesondere einer Steuereinheit zur Ansteuerung der Fixiereinheit (20') und/oder Fixierelemente (28') in Abhängigkeit von der ermittelten Relativposition.

13. Zellstapelfixiersystem (10; 10') mit einer Zellstapelfixiervorrichtung (12; 12') nach einem der vorhergehenden Ansprüche und einem, insbesondere translatorisch bewegbar gelagerten Trennelement (14) zur Durchführung des Trennvorgangs.

14. Zellstapelfixiersystem (10; 10') nach Anspruch 13, **dadurch gekennzeichnet, dass** das Trennelement (14) zumindest einen Draht (14) und/oder Faden, insbesondere eine Vielzahl von parallel zueinander angeordneten Drähten (14) und/oder Fäden umfasst.

15. Verwendung einer Zellstapelfixiervorrichtung (12; 12') nach einem der Ansprüche 1 bis 12 und/oder eines Zellstapelfixiersystems (10; 10') nach Anspruch 13 oder 14 zum Fixieren eines Zellstapels (16), insbesondere einer elektrochemischen Zelle, während eines Trennvorgangs aneinanderhaftender Zelllagen des Zellstapels (16), bei dem ein Trennelement (14) zwischen den aneinanderhaftenden Zelllagen des Zellstapels (16) durch den, insbesondere gesamten Zellstapel (16) hindurchgeführt wird.

16. Verfahren (100) zum Fixieren eines Zellstapels (16), insbesondere einer elektrochemischen Zelle, während eines Trennvorgangs aneinanderhaftender Zelllagen des Zellstapels (16), bei dem ein Trennelement (14) zwischen den aneinanderhaftenden Zelllagen des Zellstapels (16) durch den, insbesondere gesamten Zellstapel hindurchgeführt wird, wobei eine Fixiereinheit (20; 20') den in einer Zellstapelaufnahmeeinheit (18) aufgenommenen Zellstapel (16) in Abhängigkeit von einer Relativposition des Trennelements (14) zu dem aufgenommenen Zellstapel (16) an jeweils unterschiedlichen Fixierbereichen (22) in Stapelrichtung (24) gegen die Zellstapelaufnahmeeinheit (18) drückt, um den aufgenommenen Zellstapel (16) während des, insbesondere gesamten Hindurchführens des Trennelements (14) fixiert zu halten.

17. Verfahren (100) nach Anspruch 16, **dadurch gekennzeichnet, dass** die Relativposition des Trennelements (14) zu dem aufgenommenen Zellstapel (16) mittels einer, insbesondere optischen Sensoreinheit ermittelt wird, und insbesondere die Fixiereinheit (20') und/oder Fixierelemente (28') in Abhängigkeit von der ermittelten Relativposition mittels einer Steuereinheit angesteuert werden.

## Claims

1. Cell stack fixing device (12; 12') for fixing a cell stack (16), in particular an electrochemical cell, during a process for separating cell layers of the cell stack (16) adhering to each other, in which process a separating element (14) is passed through the, in particular entire, cell stack between the cell layers of the cell stack (16) adhering to each other, comprising a cell stack receiving unit (18) for receiving the cell stack (16) and a fixing unit (20; 20') which is designed to press the received cell stack (16) against the cell stack receiving unit (18), depending on a relative position of the separating element (14) with respect to the received cell stack (16), at respectively different fixing regions (22) in the stacking direction (24) in order to hold the received cell stack (16) fixed as the separating element (14) passes through, in particular all the way through.

2. Cell stack fixing device (12; 12') according to Claim 1, **characterized in that** the fixing unit (20; 20') is designed in such a way that it presses only at fixing regions (22) beneath which the separating element (14) is absent, depending on the relative position of the separating element (14) with respect to the received cell stack (16).

3. Cell stack fixing device (12; 12') according to Claim 1 or 2, **characterized in that** the fixing unit (20; 20') is designed in such a way that it always presses against the cell stack (16) at least at one fixing region (22) as the separating element (14) passes all the way through.

4. Cell stack fixing device (12; 12') according to any of the preceding claims, **characterized in that** the fixing unit (20; 20') has at least one fixing element (28, 28') translationally movably mounted relative to the cell stack receiving unit (18) for pressing the cell stack (16) against the cell stack receiving unit (18).

5. Cell stack fixing device (12) according to Claim 4, **characterized in that** the at least one fixing element (28) is designed as at least one contact-pressure roller (28) which can roll on the cell stack (16) in order to press the cell stack against the cell stack receiving unit (18) at respectively different fixing regions (22).

6. Cell stack fixing device (12) according to Claim 5, **characterized in that** the at least one contact-pressure roller (28) is controlled in a spring-loaded or active manner for exerting pressure.

7. Cell stack fixing device (12) according to Claim 5 or 6, **characterized in that** the fixing unit (20) has a translationally movably mounted support (26) on which the at least one contact-pressure roller (28) and a separating element receiving unit (30) for receiving the separating element (14) are arranged.

8. Cell stack fixing device (12) according to Claim 7, **characterized in that** the at least one contact-pressure roller (28) is arranged in front of the separating element (14) in an intended movement direction (32) of the separating element (14), and in particular furthermore at least one further contact-pressure roller (28) is arranged behind the separating element (14) in the intended movement direction (32) of the separating element (14).

9. Cell stack fixing device (12') according to Claim 4, **characterized in that** the fixing unit (20') has at least two fixing elements (28') which are designed as extendable plungers (28'), wherein the at least two plungers (28') can be extended against the cell stack (16) in the stacking direction (24) of the cell stack (16) in order to press the cell stack against the cell stack receiving unit (18) at respectively different fixing regions (22).

10. Cell stack fixing device (12') according to Claim 9, **characterized in that** the fixing unit (20') has a plurality of extendable plungers (28') which are arranged spaced apart from each other over a cell stack surface of the cell stack (16), in particular along a line or a two-dimensional pattern.

11. Cell stack fixing device (12') according to Claim 9 or 10, **characterized in that** the extendable plungers (28') can be actuated depending on the relative position of the separating element (14) with respect to the received cell stack (16) in such a way that only plungers (28') beneath which the separating element (14) is absent press against the cell stack, and/or at least one plunger (28') always presses against the cell stack (16) as the separating element (14) passes all the way through, in order to hold the cell stack fixed as the separating element (14) passes all the way through.

12. Cell stack fixing device (12; 12') according to any of the preceding claims, **characterized by** an, in particular optical, sensor unit for determining the relative position of the separating element (14) with respect to the received cell stack (16), and in particular a control unit for actuating the fixing unit (20') and/or fixing elements (28') depending on the determined relative position.

13. Cell stack fixing system (10; 10') having a cell stack fixing device (12; 12') according to any of the preceding claims and an, in particular translationally movably mounted, separating element (14) for carrying out the separating process.

14. Cell stack fixing system (10; 10') according to Claim 13, **characterized in that** the separating element (14) comprises at least one wire (14) and/or thread, in particular a plurality of wires (14) and/or threads arranged parallel to each other.

15. Use of a cell stack fixing device (12; 12') according to any of Claims 1 to 12 and/or a cell stack fixing system (10; 10') according to Claim 13 or 14 for fixing a cell stack (16), in particular an electrochemical cell, during a process for separating cell layers of the cell stack (16) adhering to each other, in which process a separating element (14) is passed through the, in particular entire, cell stack (16) between the cell layers of the cell stack (16) adhering to each other.

16. Method (100) for fixing a cell stack (16), in particular an electrochemical cell, during a process for separating cell layers of the cell stack (16) adhering to each other, in which process a separating element (14) is passed through the, in particular entire, cell stack between the cell layers of the cell stack (16) adhering to each other, wherein a fixing unit (20; 20') presses the cell stack (16) received in a cell stack receiving unit (18) against the cell stack receiving unit (18) depending on a relative position of the separating element (14) with respect to the received cell stack (16) at respectively different fixing regions (22) in the stacking direction (24) in order to hold the received cell stack (16) fixed as the separating element (14) passes through, in particular all the way through.

17. Method (100) according to Claim 16, **characterized in that** the relative position of the separating element (14) with respect to the received cell stack (16) is determined by means of an, in particular optical, sensor unit, and in particular the fixing unit (20') and/or fixing elements (28') are actuated by means of a control unit depending on the determined relative position.

## Revendications

1. Dispositif de fixation (12 ; 12') d'empilement de cellules pour la fixation d'un empilement de cellules (16), en particulier d'une cellule électrochimique, pendant une opération de séparation de couches de cellules de l'empilement de cellules (16) adhérant les unes aux autres, dans laquelle un élément de séparation (14) est guidé à travers l'empilement de cellules, en particulier entier, entre les couches de cellules de l'empilement de cellules (16) adhérant les unes aux autres, avec une unité de réception (18) d'empilement de cellules destinée à recevoir l'empilement de cellules (16) et une unité de fixation (20 ; 20'), qui est formée pour presser l'empilement de cellules (16) reçu contre l'unité de réception (18) d'empilement de cellules sur des zones de fixation (22) respectivement différentes dans la direction d'empilement (24) en fonction d'une position relative de l'élément de séparation (14) par rapport à l'empilement de cellules (16) reçu pour maintenir fixé l'empilement de cellules (16) reçu pendant le passage en particulier complet de l'élément de séparation (14).

2. Dispositif de fixation (12 ; 12') d'empilement de cellules selon la revendication 1, **caractérisé en ce que** l'unité de fixation (20 ; 20') est formée de telle manière qu'elle ne presse, en fonction de la position relative de l'élément de séparation (14) par rapport à l'empilement de cellules (16) reçu, que sur des zones de fixation (22) sous lesquelles l'élément de séparation (14) est absent.

3. Dispositif de fixation (12 ; 12') d'empilement de cellules selon la revendication 1 ou 2, **caractérisé en ce que** l'unité de fixation (20 ; 20') est formée de telle manière qu'elle appuie toujours sur la pile de cellules (16) au moins dans une zone de fixation (22) pendant le passage complet de l'élément de séparation (14).

4. Dispositif de fixation (12 ; 12') d'empilement de cellules selon l'une des revendications précédentes, **caractérisé en ce que** l'unité de fixation (20 ; 20') comporte, pour presser l'empilement de cellules (16) contre l'unité de réception (18) d'empilement de cellules, au moins un élément de fixation (28 ; 28') monté de manière à pouvoir être déplacé en translation par rapport à l'unité de réception (18) d'empilement de cellules.

5. Dispositif de fixation (12) d'empilement de cellules selon la revendication 4, **caractérisé en ce que** l'au moins un élément de fixation (28) est formé comme au moins un rouleau presseur (28), qui peut être roulé sur l'empilement de cellules (16) pour presser celui-ci contre l'unité de réception (18) d'empilement de cellules sur des zones de fixation (22) respectivement différentes.

6. Dispositif de fixation (12) d'empilement de cellules selon la revendication 5, **caractérisé en ce que** l'au moins un rouleau presseur (28) est sollicité par ressort ou est commandé activement pour appliquer une pression.

7. Dispositif de fixation (12) d'empilement de cellules selon la revendication 5 ou 6, **caractérisé en ce que** l'unité de fixation (20) comporte un support (26) monté de manière à pouvoir être déplacé par translation, sur lequel sont disposés l'au moins un rouleau presseur (28) et une unité de réception (30) d'élément de séparation destinée à recevoir l'élément de séparation (14).

8. Dispositif de fixation (12) d'empilement de cellules selon la revendication 7, **caractérisé en ce que** l'au moins un rouleau presseur (28) est disposé en amont de l'élément de séparation (14) dans une direction de déplacement (32) conforme à l'usage prévu de l'élément de séparation (14), et en particulier au moins un autre rouleau presseur (28) est disposé en aval de l'élément de séparation (14) dans la direction de déplacement (32) conforme à l'usage prévu de l'élément de séparation (14).

9. Dispositif de fixation (12') d'empilement de cellules selon la revendication 4, **caractérisé en ce que** l'unité de fixation (20') comporte au moins deux éléments de fixation (28') qui sont formés comme des coulisseaux (28') extensibles, les au moins deux coulisseaux (28') pouvant être étendus contre l'empilement de cellules (16) dans la direction d'empilement (24) de l'empilement de cellules (16) pour presser l'empilement de cellules contre l'unité de réception (18) d'empilement de cellules dans des zones de fixation (22) respectivement différentes.

10. Dispositif de fixation (12') d'empilement de cellules selon la revendication 9, **caractérisé en ce que** l'unité de fixation (20') comporte une pluralité de coulisseaux (28') extensibles, qui sont disposés à distance les uns par rapport aux autres sur une surface d'empilement de cellules de l'empilement de cellules (16), en particulier le long d'une ligne ou d'un motif bidimensionnel.

11. Dispositif de fixation (12') d'empilement de cellules selon la revendication 9 ou 10, **caractérisé en ce que** les coulisseaux (28') extensibles peuvent être pilotés en fonction de la position relative de l'élément de séparation (14) par rapport à l'empilement de cellules (16) reçu de telle manière que seuls les coulisseaux (28'), sous lesquels l'élément de séparation (14) est absent, exercent une pression contre l'empilement de cellules et/ou que, pendant le passage complet de l'élément de séparation (14), au moins un coulisseau (28') exerce toujours une pression contre l'empilement de cellules (16) pour maintenir celui-ci fixé pendant le passage complet de l'élément de séparation (14).

12. Dispositif de fixation (12 ; 12') d'empilement de cellules selon l'une des revendications précédentes, **caractérisé par** une unité de détection, en particulier optique, destinée à déterminer la position relative de l'élément de séparation (14) par rapport à l'empilement de cellules (16) reçu, et en particulier une unité de commande destinée à piloter l'unité de fixation (20') et/ou les éléments de fixation (28') en fonction de la position relative déterminée.

13. Système de fixation (10 ; 10') d'empilement de cellules avec un dispositif de fixation (12 ; 12') d'empilement de cellules selon l'une des revendications précédentes et avec un élément de séparation (14), en particulier monté de manière à pouvoir être déplacé par translation, pour la mise en œuvre de l'opération de séparation.

14. Système de fixation (10 ; 10') d'empilement de cellules selon la revendication 13, **caractérisé en ce que** l'élément de séparation (14) comprend au moins un fil métallique (14) et/ou un fil, en particulier une pluralité de fils métalliques (14) et/ou de fils disposés parallèlement les uns aux autres.

15. Utilisation d'un dispositif de fixation (12 ; 12') d'empilement de cellules selon l'une des revendications 1 à 12 et/ou d'un système de fixation (10 ; 10') d'empilement de cellules selon la revendication 13 ou 14, pour fixer un empilement de cellules (16), en particulier une cellule électrochimique, pendant une opération de séparation de couches de cellules de l'empilement de cellules (16) adhérant les unes aux autres, dans laquelle un élément de séparation (14) est guidé à travers l'empilement de cellules (16), en particulier entier, entre les couches de cellules de l'empilement de cellules (16) adhérant les unes aux autres.

16. Procédé (100) de fixation d'un empilement de cellules (16), en particulier d'une cellule électrochimique, lors d'une opération de séparation de couches de cellules de l'empilement de cellules (16) adhérant les unes aux autres, dans laquelle un élément de séparation (14) est guidé à travers l'empilement de cellules, en particulier entier, entre les couches de cellules de l'empilement de cellules (16) adhérant les unes aux autres, une unité de fixation (20 ; 20') pressant l'empilement de cellules (16) reçu dans une unité de réception (18) d'empilement de cellules contre l'unité de réception (18) d'empilement de cellules sur des zones de fixation (22) respectivement différentes dans la direction d'empilement (24) en fonction d'une position relative de l'élément de séparation (14) par rapport à l'empilement de cellules (16) reçu, afin de maintenir fixé l'empilement de cellules (16) reçu pendant le passage, en particulier complet, de l'élément de séparation (14).

17. Procédé (100) selon la revendication 16, **caractérisé en ce que** la position relative de l'élément de séparation (14) par rapport à l'empilement de cellules (16) reçu est déterminée au moyen d'une unité de détection, en particulier optique, et l'unité de fixation (20') et/ou les éléments de fixation (28') sont pilotés en fonction de la position relative déterminée au moyen d'une unité de commande.
